# EUROPEAN PATENT SPECIFICATION

(11) **EP 3 342 287 B1**
(45) Date of publication and mention of the grant of the patent: **17.02.2021**
(21) Application number: 17210948.0
(22) Date of filing: 28.12.2017
(51) Int. Cl.: A01M 23/02, A01M 23/24, A24F 19/00

(54) **RAT CATCHING SYSTEM WITH INTEGRATED REFUSE BIN, AND METHOD FOR CATCHING RATS**
RATTENFANGSYSTEM MIT INTEGRIERTEM ABFALLBEHÄLTER UND METHODE ZUM FANGEN VON RATTEN
SYSTEME DE PIEGE A RATS AVEC RECIPIENT A DECHETS ET METHODE POUR CAPTER DES RATS

(30) Priority: 29.12.2016 NL 2018095
(43) Date of publication of application: 04.07.2018
(73) Proprietor: MVO Producten B.V., 8448 GV Heerenveen (NL)
(72) Inventor: Veldhuis, Ruerd Yde, 9012 DZ Raerd (NL); Van der Meer, Rutger Jaep, 9012 DZ Raerd (NL)
(74) Representative: Verdijck, Gerardus

(56) References cited:
- EP-A1- 2 685 016
- WO-A1-2009/097898
- GB-A- 593 552
- US-A1- 2004 216 364

## Description

The present invention relates to a rat catching system for catching rats, particularly of the genus Rattus, and more particularly brown rats.

Rat catching systems employed in practice are usually provided with a clamping mechanism, as is likewise applied in traditional mouse traps. Also known is the use of cages in which bait is arranged.

EP 2 685 016 A1 discloses a shut-off device and drain. GB 593 552 A discloses an animal trap.

Such conventional traps have the drawback, among others, that they are placed on a ground surface and are susceptible to theft, damage and loss. Such traps are thus frequently used in for instance distribution centres, where forklift trucks and pallet trucks are inter alia being driven around. In addition, these traps have to be checked and, if necessary, emptied relatively often.

The present invention has for its object to provide an efficient and effective rat catching system with which the above stated drawbacks are obviated or at least reduced.

The invention provides for this purpose a rat catching system with integrated refuse bin according to claim 1.

Providing a housing enables the rat catching system to be placed in the ground. It is hereby possible to conceal caught rats from view. This visual effect has the further additional advantage that it is not possible for other animals to engage with the caught rats, which could for instance result in the spread of disease. A further advantage of placing the housing of the rat catching system according to the invention in the ground is that the system can be specifically aimed at rats, particularly of the genus Rattus, and more particularly the so-called brown rat. By providing at least one opening which is arranged in the grating plate and which is formed specifically for the rat to be caught, particularly a brown rat, it is thus prevented that other animals, for instance martens, are caught.

A stable position for the rat catching system is further obtained by placing it in the ground. This prevents for instance damage to vehicles and/or the system. This moreover reduces the risk of vandalism.

According to the invention, the rat catching system further comprises a collecting receptacle for collecting refuse, including cigarette ends which fall or are pushed through a grating plate which can be arranged on the upper side of the housing. This has particular advantages when the rat catching system with integrated refuse bin according to the invention is applied in the ground in or close to streets or squares. Rats are common at such locations, and also present are many people who can dispose of their refuse, particularly cigarette ends, more effectively owing to the integrated system.

A particular advantage of the integrated system with which both refuse, including cigarette ends, and rats can be caught lies in the fact that they can be picked up in effective manner by emptying or cleaning the catching system according to the invention periodically or as needed. When applied in for instance a public space in a community, the number of cleaning locations to be serviced thus remains limited. This is also possible since said rats are usually present at locations with relatively high concentrations of people, where refuse must also be gathered. This results in an effective and efficient rat catching system with integrated refuse bin.

For the cleaning, both the collecting receptacle and the at least one trap construction are in a currently preferred embodiment configured to be removable from the housing. It is hereby possible to optionally leave the housing in the ground during emptying and/or cleaning. This increases the efficiency of the process.

In an advantageous embodiment according to the invention the system comprises a passage for the rat, arranged in the collecting receptacle.

By likewise providing the collecting receptacle with a passage, a rat which finds its way into the system via the opening in the grating plate intended specifically for this purpose can move further along or through the refuse bin and then reach the trap construction. This achieves that the trap construction is situated under the refuse bin, whereby a rat is concealed from view once it has been caught.

The housing is preferably provided with a support structure for the at least one trap construction. The trap construction is hereby individually removable if desired. In a currently preferred embodiment the support structure comprises a mesh or grating on which the trap construction or trap constructions are placed. This will enable for instance water to easily flow away. Depending on the type of ground, a layer of sand and/or gravel is here preferably arranged under the system in order to enhance the drainage of this water. This prevents the catching system arranged in the ground from becoming submerged with water and thereby becoming unusable.

The housing is preferably provided with a first connecting element for the grating plate, wherein the grating plate lies substantially flush with the upper surface of the ground, for instance a tile floor or paving bricks, after being arranged. The housing is further preferably also provided with a second connecting element for the support structure, provided under the first connecting element. The connecting elements are preferably provided such that the grating plate is removable, optionally with a key or tool, and the support structure is also removable if desired. This provides an effective system with a relatively simple construction.

In a possible embodiment the collecting receptacle can likewise be provided, preferably releasably, on or in the housing via the first connecting element. As an alternative, a separate connecting element can be provided, which preferably lies between the first and the second connecting element.

It will be apparent that connecting elements can be embodied in various ways, for instance as clamping system, hooking system or other connecting systems.

In a currently preferred embodiment the connecting elements are formed by edges arranged in or on the housing and forming a support surface for the grating plate, collecting receptacle and/or support structure for the trap construction. A simple connection of the components of the system according to the invention is hereby provided in effective manner, wherein the different parts are removable for cleaning and/or emptying, among other things.

In an advantageous embodiment according to the invention the rat catching system comprises two or more trap constructions.

Applying a plurality of trap constructions, for instance at least two and in a currently preferred embodiment four trap constructions, further increases the capacity of the catching system. It is thus for instance possible to install a catching system according to the invention with the dimensions of a paving stone (30 x 30 cm) in a pavement in effective manner and thereby catch the greatest possible number of rats. This further increases the efficiency.

The rat catching system according to the invention preferably comprises bait. Such bait is for instance oats or a scented block aimed specifically at rats. The bait is preferably situated in a bait container which is placed between the trap constructions. Because in a currently preferred embodiment according to the invention the one or more trap constructions are placed under the refuse bin, the bait is likewise placed out of sight. It can hereby not be removed by vandalism. In addition, the bait is prevented from being for instance blown away or washed away. The effectiveness of the bait is hereby further increased, and risks to the surrounding area are in addition avoided or at least reduced.

In an advantageous embodiment according to the invention the trap construction comprises a detector configured to detect a caught rat.

Providing a detector makes it possible to determine in effective manner whether the trap has snapped shut or a rat has been caught otherwise.

The rat catching system according to the invention is preferably further provided with a transmitter configured to transmit a message in response to an indication of a caught rat, received by a detector.

Providing such a transmitter enables a message to be sent to the user or owner of the rat catching system. After receiving such a message, an inspection can be carried out and an emptying or cleaning of the system can for instance be performed. The number of unnecessary inspections is hereby reduced, whereby the rat catching system can be employed in more effective manner. The message can for instance be sent to a mobile phone of a user or owner, as well as to an automated processing system which registers the received alerts and for instance creates a schedule for the inspection, emptying and/or cleaning. If desired, such a scheduling system can be provided with a route planner in order to also generate an effective route between the different catching systems which have generated an alert and/or are due for a periodic inspection. This further increases the efficiency of the catching system according to the invention.

In an embodiment the rat catching system according to the invention can if desired also be provided without application of the integrated refuse bin. Although a number of advantages will hereby not be provided, it remains possible to hereby provide an effective rat catching system wherein the caught rat or rats preferably remain out of sight. Some of the stated advantages are therefore achieved after all.

The invention likewise relates to a method for catching rats, the method comprising the steps of:
- arranging a rat catching system with integrated refuse bin according an embodiment of the above described invention in the ground; and
- catching a rat and gathering refuse, including cigarette ends.

The method provides the same advantages and effects as described for the rat catching system.

In an advantageous embodiment use can additionally be made of detecting a caught rat with a detector and sending a message as a response thereto. This message can for instance be sent to a user, owner or scheduling system such that the catching system is preferably cleaned or emptied. The pick-up service or cleaning service is for this purpose preferably activated in response to reception of such a message. An effective cleaning system is hereby realized.

Further advantages, details and features of the invention are explained on the basis of preferred embodiments thereof, wherein reference is made to the accompanying drawings, in which:
- figure 1 shows a view of a rat catching system arranged in the ground; and
- figure 2 shows a view of the components of the system of figure 1.

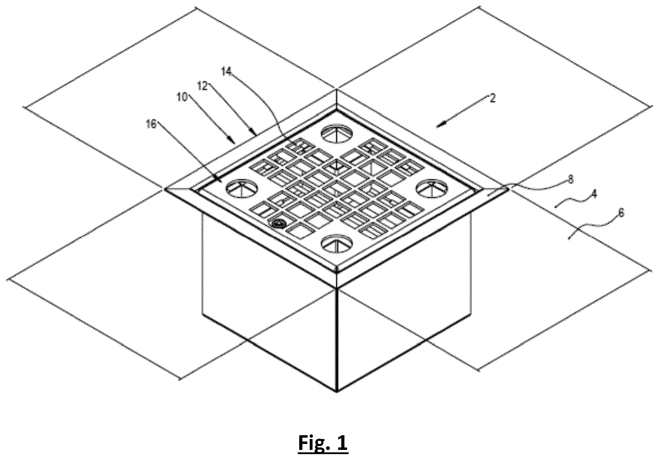

Rat catching system 2 (figure 1) is placed in ground 4, wherein ground 4 is provided with a number of tiles 6. System 2 is provided here with upper edge 8 in which grating 10 with pattern 12 of refuse openings is arranged. In the shown embodiment grating 10 is provided with a number of refuse openings 14 and four openings 16 functioning as entrance for the rats to be caught.

In the shown embodiment grating 10 is about 30 x 30 cm and the overall width at the position of edge 8 of system 2 amounts to about 35 x 35 cm, such that edge 8 rests partially on tiles 6. Sinking of system 2 is hereby for instance avoided. In the shown embodiment openings 16 are provided with an inner dimension of about 45 mm, such that opening 16 is adapted to catching brown rats, and other animals, for instance martens, are prevented from entering.

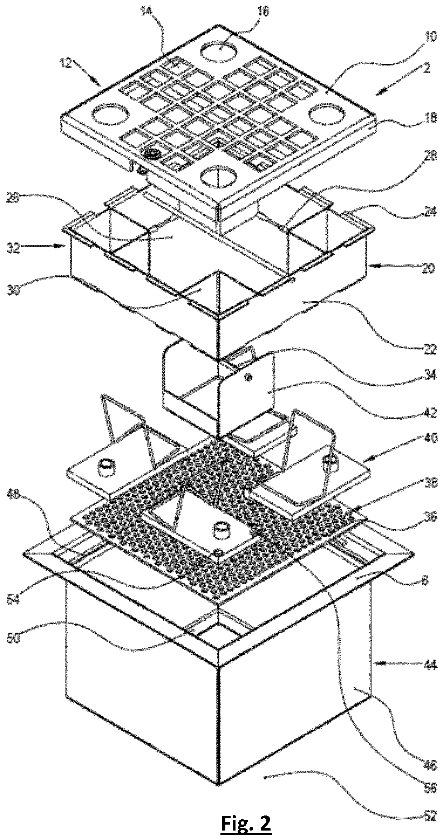

System 2 (figure 2) is further provided with edge 18 on grating 10. Situated under grating 10 is refuse bin 20, which is provided with a number of side walls 22 and is provided on the upper side with edges 24. Provided on the lower side is bottom 26, wherein a number of openings 28 are arranged close to the transition between side walls 22 and bottom 26, inter alia for removing rainwater. Bin 20 is further provided with a number of walls 30 for thereby forming passage, throughfeed or passageway 32 for rats to be caught, which enter system 2 via openings 16 in grating 10.

In the shown embodiment grating 36 is situated under bin 20. Grating 36 is provided with a number of holes 38, inter alia for passage of for instance rainwater. In the shown embodiment grating 36 supports four trap constructions and a bait container 42 placed therebetween. Also provided in the shown embodiment is bar 34, for instance for simplifying the handling of bait container 42. A similar bar can also be provided for handling of bin 20.

The above stated components are held in housing 44, which is provided with a number of walls 46. In the shown embodiment the overall height of housing 44 is about 200 mm.

Support edge 48 is situated close to an upper side of housing 44 as first connecting means for grating 10 and bin 20, and support edge 50 is situated close to the lower side as second connecting means for grating or support structure 36. A specific layer 52 of gravel or sand is preferably situated under housing 44. It will be apparent that the necessity for this depends on the position of system 2 and the type of ground.

In the shown embodiment trap 40 is provided with detector 54 and transmitter 56 with which it is possible to send a signal that a rat has been caught from system 2 to a user.

For the purpose of catching rats system 2 is placed in ground 4. In the shown embodiment the outer dimensions of system 2 are here adapted to tiles or floor 6. This enables a simple placing. Traps 40 are installed on grating 36 and in the shown embodiment are provided with detector 54 and transmitter 56. Bait container 42 is filled, after which bin 20 is arranged, followed by grating 10.

In use, persons can for instance push cigarette ends through holes 14 of pattern 12 such that they are gathered in bin 20. Rats will be able to enter system 2 through openings 16 and will find their way to one of the traps 40, and will be caught thereby. It will be apparent that various trap constructions 40 can be applied. In the shown embodiment a signal is generated by detector 54 after a trap 40 snaps shut, which signal is then sent with transmitter 56 to a user or scheduling system. A cleaning service can then for instance be scheduled for picking up, emptying or cleaning system 2, such that it is once again suitable for further use.

The present invention is by no means limited to the above described preferred embodiment thereof. The rights sought are defined by the following claims, within the scope of which many modifications can be envisaged.

## Claims

1. Rat catching system (2) with integrated refuse bin, comprising:
- a housing (44) provided with a number of side walls (46) and configured for the housing being placed in the ground (4);
- a grating plate (12) arranged on an upper side of the housing and provided with a number of openings (14) for passage of refuse, including cigarette ends;
- a collecting receptacle (20) of the integrated refuse bin for collecting the refuse, **characterised by**
- an opening (16) arranged in the grating plate and configured for a rat; and
- a trap construction (40) configured to catch the rat, wherein the trap construction is situated under the collecting receptacle.

2. Rat catching system as claimed in claim 1, further comprising a passage (38) for the rat, arranged in the collecting receptacle.

3. Rat catching system as claimed in claim 1 or 2, wherein the housing is provided with a support structure (36) for the trap construction.

4. Rat catching system as claimed in claim 3, wherein the housing is provided with a first connecting element (48) for the grating plate that is situated close to an upper edge of the housing such that the grating plate lies substantially flush with the upper surface of the ground after being arranged, and a second connecting element (50) for the support structure, provided under the first connecting element.

5. Rat catching system as claimed in one or more of the foregoing claims, wherein two or more trap constructions (40) are provided.

6. Rat catching system as claimed in one or more of the foregoing claims, further comprising bait (42).

7. Rat catching system as claimed in one or more of the foregoing claims, wherein the grating plate, collecting receptacle and trap construction are removable from the housing.

8. Rat catching system as claimed in one or more of the foregoing claims, wherein the trap construction comprises a detector (54) configured to detect a caught rat.

9. Rat catching system as claimed in claim 8, further comprising a transmitter (56) configured to transmit a message in response to an indication of a caught rat, received by the detector.

10. Method for catching rats, comprising the steps of:
- arranging a rat catching system (2) with integrated refuse bin (20) as claimed in one or more of the foregoing claims in the ground; and
- catching a rat and gathering refuse, including cigarette ends.

11. Method as claimed in claim 10, further comprising of detecting a caught rat with a detector (54) and sending a message in response thereto.

12. Method as claimed in claim 11, further comprising of activating a pick-up service or cleaning service in response to reception of a sent message.

## Patentansprüche

1. Rattenfangsystem (2) mit integriertem Abfallbehälter, aufweisend:
- ein Gehäuse (44), das mit einer Anzahl von Seitenwänden (46) versehen und ausgebildet ist, um das Gehäuse in den Boden zu versenken (4);
- eine Gitterplatte (12), die auf einer Oberseite des Gehäuses angeordnet ist, und mit einer Anzahl von Öffnungen (14) versehen ist, als Durchlass für Müll, einschließlich Zigaretten,
- einen Sammelbehälter (20) des integrierten Abfallbehälters zum Sammeln des Mülls, **gekennzeichnet durch**
- eine in der Gitterplatte angeordnete, für eine Ratte ausgelegte Öffnung (16); und
- eine Fallenkonstruktion (40), die ausgebildet ist, um die Ratte zu fangen, wobei die Fallenkonstruktion sich unter dem Sammelbehälter befindet.

2. Rattenfangsystem nach Anspruch 1, ferner mit einem Durchgang (38) für die Ratte, welcher sich im Sammelbehälter befindet.

3. Rattenfangsystem nach Anspruch 1 oder 2, wobei das Gehäuse eine Stützstruktur (36) für die Fallenkonstruktion aufweist.

4. Rattenfangsystem nach Anspruch 3, wobei das Gehäuse mit einem ersten Verbindungselement (48) für die Gitterplatte ausgestattet ist, das sich in der Nähe einer Oberkante des Gehäuses befindet, so dass die Gitterplatte nach Einbau mit der oberen Bodenoberfläche im Wesentlichen bündig ist, und
ein zweites Verbindungselement (50) für die Stützstruktur, das unter dem ersten Verbindungselement vorgesehen ist.

5. Rattenfangsystem nach einem oder mehreren der vorhergehenden Ansprüche, wobei zwei oder mehr Fallenkonstruktionen (40) bereitgestellt werden.

6. Rattenfangsystem nach einem oder mehreren der vorhergehenden Ansprüche, ferner aufweisend einen Köder (42).

7. Rattenfangsystem nach einem oder mehreren der vorhergehenden Ansprüche, wobei Gitterplatte, Sammelbehälter und Fallenkonstruktion aus dem Gehäuse herausnehmbar sind.

8. Rattenfangsystem nach einem oder mehreren der vorhergehenden Ansprüche, wobei die Konstruktion der Falle aus einem Detektor (54) besteht, der so ausgebildet ist, dass er eine gefangene Ratte erkennt.

9. Rattenfangsystem nach Anspruch 8, ferner aufweisend einen Sender (56) der so konfiguriert ist, dass dieser als Antwort auf eine Meldung des Detektors bezüglich einer gefangenen Ratte eine Nachricht sendet.

10. Verfahren zum Fangen von Ratten, aufweisend die folgenden Schritte:
- Anordnen eines Rattenfangsystems (2) mit integriertem Abfallbehälter (20), gemäß den vorhergehenden Ansprüchen, im Boden; und
- Fangen einer Ratte und Sammeln von Abfällen, einschließlich Zigarettenkippen.

11. Verfahren nach Anspruch 10, weiterhin aufweisend das Erfassen einer gefangenen Ratte mit einem Detektor (54) und Senden einer Nachricht als Antwort darauf.

12. Verfahren nach Anspruch 11, weiterhin aufweisend die Anforderung eines Abholdienstes oder Reinigungsdienstes als Reaktion auf den Erhalt einer gesendeten Nachricht.

## Revendications

1. Dispositif de piège à rat (2) avec conteneur à déchet intégré, comprenant :
un logement (44) comportant un certain nombre de parois latérales (46) et configuré de telle sorte que le logement est placé sur le sol (4) ;
une plaque en grille (12) agencée sur un côté supérieur du logement et comportant un certain nombre d'ouvertures (14) afin d'assurer le passage de déchets, comportant des mégots de cigarette ;
un réceptacle de collecte (20) du conteneur à déchet intégré destiné à collecter les déchets,
**caractérisé par**
une ouverture (16) agencée sur la plaque en grille et configurée pour un rat ; et
une construction de piège (40) configurée de manière à attraper le rat, dans lequel la construction de piège est située au-dessous du réceptacle de collecte.

2. Dispositif de piège à rat selon la revendication 1, comprenant, en outre, un passage (38) pour le rat, agencé dans le réceptacle de collecte.

3. Dispositif de piège à rat selon la revendication 1 ou 2, dans lequel le logement comporte une structure de support (36) destinée à la construction de piège.

4. Dispositif de piège à rat selon la revendication 3, dans lequel le logement comporte un premier élément de liaison (48) de la plaque en grille qui est situé à proximité d'un bord supérieur du logement de telle sorte que la plaque en grille est située sensiblement à fleur de la surface supérieure du sol après avoir été mise en place, et un second élément de liaison (50) de la structure de support, agencé au-dessous du premier élément de liaison.

5. Dispositif de piège à rat selon l'une quelconque des revendications précédentes, dans lequel deux ou plusieurs constructions de piège (40) sont formées.

6. Dispositif de piège à rat selon l'une quelconque des revendications précédentes, comprenant, en outre, un appât (42).

7. Dispositif de piège à rat selon l'une quelconque des revendications précédentes, dans lequel la plaque en grille, le réceptacle de collecte et la construction de piège sont amovibles par rapport au logement.

8. Dispositif de piège à rat selon l'une quelconque des revendications précédentes, dans lequel la construction de piège comprend un détecteur (54) configuré de manière à détecter un rat piégé.

9. Dispositif de piège à rat selon la revendication 8, comprenant, en outre, un transmetteur (56) configuré de manière à transmettre un message en réponse à une indication de rat piégé, reçue par le détecteur.

10. Procédé permettant d'attraper des rats, comprenant les étapes :
d'agencement d'un dispositif formant piège à rat (2) avec un conteneur à déchet intégré (20) selon une ou plusieurs des revendications précédentes sur le sol ; et
de piégeage d'un rat et de collecte de déchets, comportant des mégots de cigarette.

11. Procédé selon la revendication 10, comprenant, en outre, la détection d'un rat piégé avec un détecteur (54) et l'émission d'un message en réponse à cela.

12. Procédé selon la revendication 11, comprenant, en outre, l'activation d'un service de ramassage ou service de nettoyage en réponse à la réception d'un message envoyé.
